# EUROPÄISCHE PATENTSCHRIFT

(11) **EP 0 542 023 B1**
(45) Veröffentlichungstag und Bekanntmachung des Hinweises auf die Patenterteilung: **31.01.1996**
(21) Anmeldenummer: 92118310.9
(22) Anmeldetag: 27.10.1992
(51) Int. Cl.: B23D 61/06

(54) **Halterung für Schneidsegment einer Kreissäge**
Cutting insert holder for circular saw blade
Porte-outil pour plaquette de coupe d'une lame de scie circulaire

(30) Priorität: 14.11.1991 DE 4137497
(43) Veröffentlichungstag der Anmeldung: 19.05.1993
(73) Patentinhaber: Ernst Winter & Sohn (GmbH & Co.), D-20243 Hamburg (DE)
(72) Erfinder: Wiemann, Hans-Joachim, Dr.-Ing., W-2000 Hamburg 63 (DE)
(74) Vertreter: Minetti, Ralf, Dipl.-Ing.

(56) Entgegenhaltungen:
- WO-A-92/16327
- DE-A- 2 734 936
- DE-C- 379 466
- DE-C- 918 710
- DE-U- 9 114 199
- US-A- 4 492 140

## Beschreibung

Die Erfindung betrifft eine Halterung für ein austauschbares Schneidsegment einer Kreissäge, deren Sägeblatt am Außenrand mit radial ausgerichteten Einschnitten versehen ist, wobei ein Schneidsegment in einer schlitzförmigen Aufnahme eines scheibenförmigen Trägers im Klemmsitz gehalten ist, der auswechselbar in einem Einschnitt des Sägeblattes angeordnet ist.

Bei großen Sägen mit einem Durchmesser von mehreren Metern, die mit einer Vielzahl von über den Umfang verteilt angeordneten Schneidsegmenten versehen sind, besteht insbesondere dann ein Bedürfnis nach einer leichten Austauschbarkeit dieser Segmente, wenn diese aus einem hochwertigen Schneidmaterial bestehen wie beispielsweise Schneidkörnern aus Diamant. Die Durchführung eines Austausches einzelner Schneidsegmente ist aus Kostengründen zweckmäßig, wenn beispielsweise einzelne Segmente beschädigt wurden oder stärker abgenutzt wurden als andere, da die Austauschbarkeit die Möglichkeit gibt, das Sägeblatt und viele seiner Segmente nach einem teilweisen Austauschen von Segmenten weiter verwenden zu können.

Es wurde deshalb bereits nach Wegen gesucht, den Träger eines Segmentes mit einer Halterung zu versehen, die in der Art einer leichtlösbaren Verbindung mit dem Sägeblatt ausgebildet ist.

Nach der den nächstkommenden Stand der Technik beschreibenden US-A 4492140 ist eine Kreissäge bekannt, deren Sägeblatt am Umfang bogenförmig gekrümmte Einschnitte für die Aufnahme von Trägern aufweist, die jeweils einen Schlitz für die Befestigung eines Schneidsegmentes im Klemmsitz haben. Für jedes Schneidsegment ist deshalb ein Zwischenträger vorgesehen. Besondere zusätzliche Mittel für das Hervorrufen der Klemmwirkung sind nicht vorgesehen. Die Klemmwirkung ergibt sich allein durch die Gestaltung des Schlitzes für die Aufnahme eines Schneidsegmentes einerseits und der Aufnahme des Trägers andererseits. Die Möglichkeit einer Nachstellung des Schneidsegmentes bei einem Teilverbrauch desselben ist nicht berücksichtigt. Darüber hinaus ist es aufwendig, bei einer solchen Gestaltung des Sägeblattes alle Schneidsegmente gegen andere auszuwechseln.

Aufgabe der Erfindung ist es, eine Halterung für eine Kreissäge größeren Durchmessers zu schaffen, bei der die einzelnen Schneidsegmente leicht austauschbar im Sägeblatt verankert sind und die Möglichkeit gegeben ist, die Schneidsegmente bei einem Teilverbrauch ohne größeren Zeitaufwand nachstellen zu können. Gemäß der Erfindung ist dafür vorgesehen, daß ein Träger eine Bohrung für die Aufnahme einer Spannschraube aufweist, die zwischen zwei Aufnahmen für die Halterung von zwei Segmenten in einem Träger liegt, wobei die Bohrung (7) eine sich nach außen kegelförmig erweiternde Öffnung aufweist und die Bohrung (7) in einem Schlitz des Trägers (3) liegt. Damit lassen sich gleichzeitig zwei Schneidsegmente durch das Lösen einer Spannschraube gegen andere austauschen, oder sie lassen sich auch in ihrer Stellung nachstellen bei einem Teilverbrauch, ohne daß es der Ablösung des Trägers vom Sägeblatt bedarf. Dies führt zu einem nur sehr geringen Arbeits- und Zeitaufwand bei einer Neueinrichtung einer Kreissäge. Dabei können Schneidsegmente zum Einsatz kommen, die lediglich an ihrer Brustseite bzw. Vorderseite einen dünnen Schneidbelag aufweisen, der sich radial erstreckt, so daß die Schneidsegmente nach einem Teilverbrauch durch einen radialen Versatz und eine neue Verankerung eine Wiederverwendung finden können. Damit werden kurze Reibungsflächen im Bereich der Außenseite der Schneidelemente ausgenutzt, welche eine ausreichende Kühlmittelzufuhr und Spanabfuhr erleichtern. Darüber hinaus kann eine wesentliche Geräuschdämpfung erzielt werden, insbesondere dann, wenn die Träger der Schneidsegmente aus einem Kunststoff bestehen wie insbesondere Polyimid oder einem anderen, elastischen Kunststoff.

Die erfindungsgemäße Anordnung erlaubt es im übrigen, die Schneidsegmente mit ihrem Schneidbelag senkrecht bzw. in axialer Richtung des Sägeblattes oder schräg zu dem Sägeblatt auszurichten, so daß auch die Möglichkeit einer Kreuzverzahnung in der Anordnung der Schneidelemente gegeben ist. Da die Schneidsegmente seitlich über beide Seiten des Sägeblattes vorstehen können besteht im übrigen die Möglichkeit, verhältnismäßig dünne Sägeblätter zu verwenden, wobei dann der Träger der Schneidsegmente der als eine Scheibe ausgebildet ist, die Dicke des Sägeblattes aufweisen kann.

Ein weiterer Vorteil liegt darin, Schneidsegmente verwenden zu können, bei denen die Schneidstoffpartikel wie beispielsweise Diamantkörner in einer metallischen Bindung enthalten sind durch galvanische Abscheidung eines Metalls wie Nickel oder Kobalt oder einer Kombination derartiger Metalle.

Ausführungsbeispiele der Erfindung sind nachstehend unter Bezugnahme auf eine Zeichnung erläutert. In der Zeichnung zeigen:
- Figur 1:: ein Teilausschnitt einer Kreissäge mit einer Halterung für zwei Schneidsegmente;
- Figur 2:: die Halterung für zwei Schneidsegmente mit Spannschraube;
- Figur 3:: die Anordnung von Figur 1 nach Einsatz von zwei Schneidsegmenten;
- Figur 4:: eine Draufsicht auf die Anordnung von Figur 3 und
- Figur 5:: eine abgewandelte Ausführungsform mit schräg ausgerichteten Schneidsegmenten.

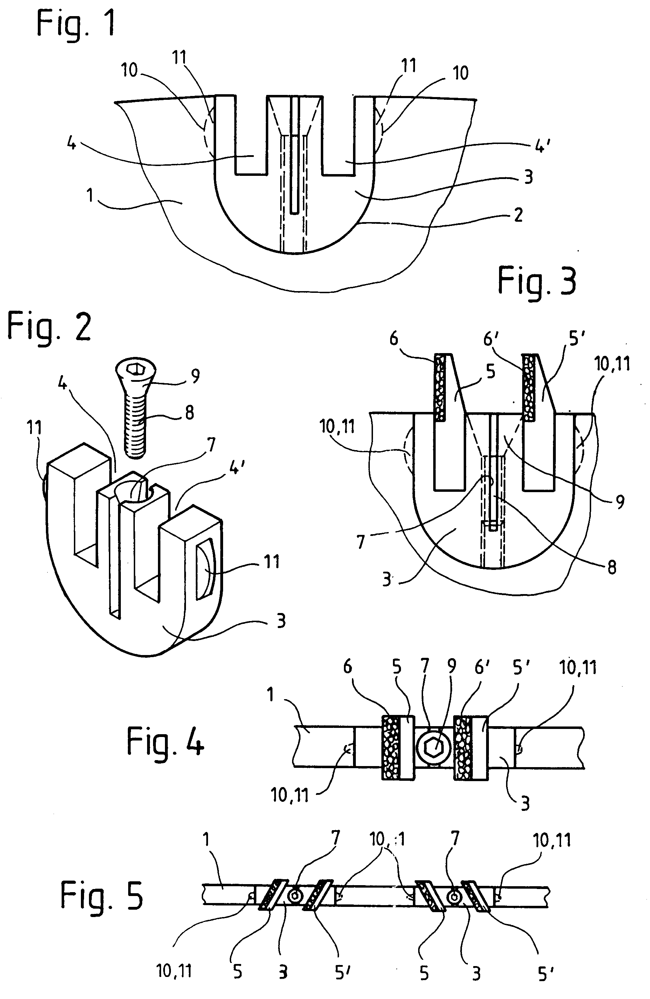

In Figur 1 ist eine Kreissäge im Teilausschnitt wiedergegeben, deren Sägeblatt 1 einen Durchmesser von mehr als zwei Metern aufweist. Das Sägeblatt 1 besteht aus Metall und hat eine Stärke von etwa 10 mm. An seinem Umfang ist das Sägeblatt nit Einschnitten 2 versehen, welche einen bogenförmigen Boden aufweisen und der Aufnahme jeweils eines Trägers 3 dienen für die Halterung von zwei Schneidsegmenten 5 bzw. 5' entsprechend der Figur 3. Der scheibenförmige Träger 3 besteht aus einem elastischen Kunststoff wie Polyimid und weist für die Aufnahme der Schneidsegmente 5 und 5' zwei Ausnehmungen bzw. Aufnahmen 4 und 4' auf. Zwischen diesen Aufnahmen 4 und 4' ist der Träger 3 mit einem Schlitz versehen, in dessen Mitte sich eine Gewindebohrung 7 befindet für die Aufnahme einer Klemmschraube 8, die einen kegelförmigen Kopf 9 aufweist, wie der Figur 2 zu entnehmen ist.

An der Außenseite der beiden U - förmigen Schenkel des Trägers 3 sind bogenförmige Ansätze 11 angeordnet, die sich in Kammern 10 des Sägeblattes 1 erstrecken, um den Träger 3 in radialer und axialer Richtung innerhalb des Sägeblattes 1 festzuhalten.

Für die Halterung der auswechselbaren Schneidsegmente 5 und 5' wird nach ihren Einsatz in die Aufnahmen 4 und 4' die Klemmschraube 8 eingesatzt und festgezogen. Dabei spreizen sich die zwei durch einen Schlitz gehaltenen Wände des Mittelsteges vom Träger 3, so daß seitlich ein Druck ausgeübt wird auf die Schneidsegmente 5 und 5' und auf die U - förmigen Schenkel des Trägers 3, die für seine Verspannung innerhalb des Einschnittes bzw. Schlitzes 2 führen und damit zur festen Verspannung der Ansätze 11 in den Kammern 10.

Bei der Ausführung nach den Figuren 3 und 4 sind die Schneidbeläge 6 und 6', bei denen es sich um eine Diamantkörnung handelt, die in einer metallischen Bindung gehalten ist, senkrecht ausgerichtet zu der Ebene des Sägeblattes 1. Beide Schneidsegmente 5 und 5' stehen dabei seitlich über die Außenseiten eines Sägeblattes 1 vor, wie der Figur 4 zu entnehmen ist. Zwischen den Schneidsegmenten 5 und 5' befindet sich ein größerer Spanraum. In Umfangsrichtung des Sägeblattes sind die Schneidbeläge 6 und 6' verhältnismäßig kurz, so daß keine Probleme auftreten hinsichtlich der Spanabfuhr und der Kühlmittelzufuhr. Der Figur 3 ist weiterhin zu entnehmen, daß sich die Schneidbeläge 6 und 6' radial bis unter den Außenrand des Sägeblattes 1 erstrecken können, so daß nach einem Teilverbrauch der Schneidsegmente 5 und 5' diese radial nach außen versetzt werden können, um die Schneidbeläge 6 und 6' in voller Höhe ausnutzen zu können.

Gemäß der Figur 5 können die Schreidsegmente und insbesondere die Schneidkanten auch schräg ausgerichtet sein zu der Achse des Sägeblattes 1, wobei unterschiedliche Ausrichtungen ausgenutzt werden können, so daß auch eine Kreuzverzahnung ausgenutzt werden kann.

## Patentansprüche

1. Halterung für ein austauschbares Schneidsegment (5, 5') einer Kreissäge, deren Sägeblatt (1) am Außenrand mit radial ausgerichteten Einschnitten (2) versehen ist, wobei ein Schneidsegment (5, 5') in einer schlitzförmigen Aufnahme (4, 4') eines scheibenförmigen Trägers (3) im Klemmsitz gehalten ist, der auswechselbar in einem Einschnitt (2) des Sägeblattes (1) angeordnet ist, dadurch gekennzeichnet, daß ein Träger (3) eine Bohrung (7) für die Aufnahme einer Spannschraube (8) aufweist, die zwischen zwei Aufnahmen (4, 4') für die Halterung von zwei Segmenten (5, 5') in einem Träger (3) liegt, wobei die Bohrung (7) eine sich nach außen kegelförmig erweiternde Öffnung aufweist und die Bohrung (7) in einem Schlitz des Trägers (3) liegt.

2. Halterung nach Anspruch 1, dadurch gekennzeichnet, daß der Träger (3) auf seiner Außenseite Ansätze (11) trägt, die in Kammern (10) des Sägeblattes (1) eingreifen.

3. Halterung nach Anspruch 1, dadurch gekennzeichnet, daß die Schneidsegmente (5) unterschiedlich ausgerichtet sind.

4. Halterung nach Anspruch 1, dadurch gekennzeichnet, daß der Träger (3) aus einem elastischen Kunststoff wie Polyimid besteht.

## Claims

1. A holding device for an interchangeable cutting segment (5, 5') of a circular saw, the saw blade (1) of which is equipped on the outer edge with radially orientated recesses, a cutting segment (5, 5') being press fitted in a slot shaped recess (4, 4') of a disk shaped support (3) which is placed interchangeable in a recess (2) of the saw blade (1), characterized in that a support (3) has a drill hole (7) to receive a binding screw (8) which is between two recesses (4, 4') for the holding of two segments (5, 5') in a support (3), the drill hole (7) having an aperture which widens conically outwards and the drill hole (7) being in a slot of the support (3).

2. A holding device according to claim 1, characterized in that the support (3) bears on its outer side shoulders (11) which are in gear in chambers (10) of the saw blade (1).

3. A holding device according to claim 1, characterized in that the cutting segments (5) are orientated differently.

4. A holding device according to claim 1, characterized in that the support (3) is made of an elastic plastic material such as polyimide.

## Revendications

1. Fixation pour un segment coupant interchangeable (5, 5') de scie circulaire dont la lame de scie (1) est pourvue sur le bord extérieur d'encoches (2) orientées radialement, un segment coupant (5, 5') étant maintenu en ajustement pressé dans un logement (4, 4') en forme de fente d'un support (3) en forme de disque, qui est placé interchangeable dans une encoche (2) de la lame de scie (1), caractérisée en ce qu'un support (3) présente une forure (7) pour le logement d'une vis de fixation (8), qui se trouve entre deux logements (4, 4') pour la fixation de deux segments (5, 5') dans un support (3), la forure (7) présentant une ouverture qui s'élargit en forme de cône vers l'extérieur et la forure (7) se situant dans une fente du support (3).

2. Fixation selon la revendication 1, caractérisée en ce que le support (3) porte sur sa face extérieure des épaulements (11) qui s'engrènent dans des chambres (10) de la lame de scie (1).

3. Fixation selon la revendication 1, caractérisée en ce que les segments coupants (5) sont orientés différemment.

4. Fixation selon la revendication 1, caractérisée en ce que le support (3) est constitué par une matière plastique élastique comme le polyimide.
